# EUROPEAN PATENT APPLICATION

(11) **EP 0 724 224 A1**
(43) Date of publication of application: **31.07.1996**
(21) Application number: 95650001.1
(22) Date of filing: 27.01.1995
(51) Int. Cl.: G06F 17/60

(54) **Method for efficient database access**

(71) Applicant: ACCOUNTANCY AND BUSINESS COLLEGE (SOFTWARE) LIMITED, Dublin 2 (IE)
(72) Inventor: McKeon, Michael, Dublin 7 (IE); Daly, Patrick, Castleknock, Dublin 15 (IE); Wall, Gary, Ballinteer, Dublin 16 (IE)
(74) Representative: Weldon, Michael James

(57) **Abstract**

A network processor CPU (9) generates a memory array (30) in read/write memory having matrices (31-34), each relating to an output data structure. For a single record (6) retrieved from the host (3) all possible matrices are updated according to the parameter correlations. There is direct intra-memory transfer of data from the array (30) to output structures for different output devices (15,16,17,18). Iterative data record searching and retrieval operations are avoided, thus reducing response time.

## Description

The invention relates to electronic signal processing for control of data transfers in a high-speed computer network environment. In more detail, the invention relates to the retrieval of programs from the host processor, the processing of retrieved data records using the programs, and the control of output devices to transmit output signals. A network system implementing such an electronic signal processing method is described in British Patent Specification No. GB-B-2153118B (N.V. Philips).

Heretofore, a network processor has retrieved a program and subsequently a sequence of records, each record being processed in turn. In this way output data is built up on disk or in memory and merged with output device control signals. Such a method lacks response time efficiency and versatility in control of different output devices where the programs are complex and there are many data records in a system with many output devices.

The invention is directed towards providing an electronic signal processing method which overcomes these problems, while at the same time maintaining the advantages which are associated with conventional network systems.

According to the invention, there is provided a signal processing method carried out by a network processor in a system having a host processor and a plurality of network processors interconnected by a network link, the method comprising the steps of retrieving data records from the host processor, processing the data and generating output signals, characterised in that
the network processor initially :-
stores an output data structure in its read/write memory in a common format whereby it is compatible with electronic mail, automatic fax, printer and screen output devices;
automatically generates in its read/write memory a matrix which relates to the output data structure and is associated with two data parameters of the structure, wherein each parameter is associated with a coordinate of the matrix and the matrix comprises a plurality of cells defined by their location and maximum size, and in which each cell has a direct relationship with a data element in the related output data structure; and
stores additional output data structures and automatically creates a memory array comprising matrices in which each subsequent matrix has two parameter coordinates and matrices are aligned within the read/write memory if they have a common parameter coordinate and are independent if there is no common parameter coordinate and in which there is a matrix corresponding to each output data structure;
after initialisation, the network processor:-
retrieves a first data record from the host processor and carries out the sub-steps of :-
determining if the record is associated with any of the parameters which form coordinates of the memory array and if such a parameter is located, determining if there is a correlating parameter for any matrix of the array,
processing the data elements in the record according to programs retrieved from the host processor and writing the processed data to an appropriate cell within the identified matrix, and
when a cell has been updated, determining if the record is associated with parameter correlations for other matrices and carrying out processing and cell updating operations; and
retrieves the next record and repeats the parameter correlation searching operations and also the processing and updating operations; and
after processing, the network processor:-
directly transfers data from cells of the memory array to each output data structure within the read/write memory; and
sequentially transmits the data in the format of the output data structures to the output devices.

In one embodiment, the step of creating the memory array in read/write memory includes the sub-steps of storing a counter for each cell of the memory array, setting the counter value to a reset value before retrieval of a data record and incrementing a counter value when its associated cell is updated; and comprising the further steps of when all records have been processed automatically comparing the counter values with reference values to ensure that the memory array has been completely updated from the data records.

Preferably, the step of generating the memory array includes the sub-steps of allocating cells into sub-divisions whereby an update to a cell within a single sub-division provides a signal to the processor to cease searching for the parameter correlations of that sub-division within the individual record being searched.

In another embodiment, the step of transmitting the output file to the output device comprises the sub-steps of capturing a node address during log-on by a user, using said node address to search a control database to determine allowed output devices and data structures, and directing transmission of the output file to the allowed devices.

In a still further embodiment, the control database stores data relating to default matrices, memory array sub-divisions and allowed users, and said data is automatically retrieved by the network processor before transmitting signals to the output devices.

In another embodiment the transmission of an output file to a fax machine or an electronic mail device is preceded by the sub-steps of the processor automatically determining default transmission data, and merging said data with the output file to create the output file, and the further sub-steps after transmission of the final output file of automatically monitoring transmission progress without retrieval of external transmission programs.

The invention will be more clearly understood from the following description of some embodiments thereof, given by way of example only with reference to the accompanying drawings, in which :-
Fig. 1 is a schematic representation of a system which implements a signal processing method of the invention;
Fig. 2 is a flow chart illustrating the manner in which a network processor prepares for the processing and output of data;
Figs. 3(a) and 3(b) are schematic representations of memory structures which are generated by a network processor in the method illustrated in Fig. 2;
Fig. 4 is a flow chart illustrating the manner in which a network processor processes the data; and
Fig. 5 is a flow chart illustrating the manner in which a network processor outputs the data.

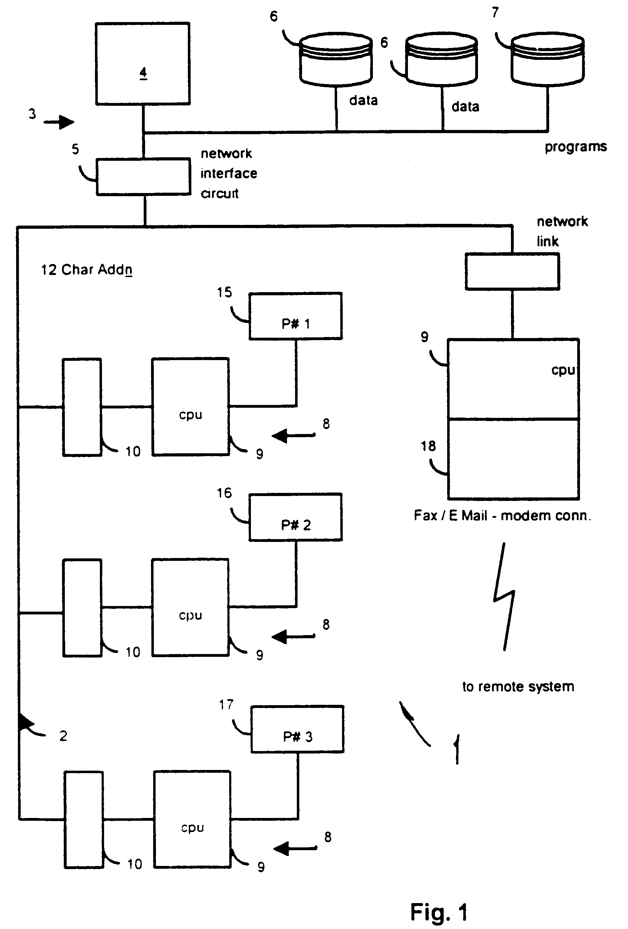

Referring to the drawings, and initially to Fig. 1, there is shown a system which carries out a signal processing method of the invention. The system is indicated generally by the reference numeral 1. The system 1 comprises a bi-directional network link 2 connected to a host processor 3. The host processor 3 has a CPU 4 connected to a network interface circuit 5. The CPU 4 is also connected to fixed disk drives containing data files 6 and programs 7. In more detail, the CPU 4 comprises a microprocessor circuit with an Intel 486™ microprocessor operating at 50 MHz and having a 16 bit external data bus and a 16 it address bus. The data 6 and programs 7 take up a fixed disk capacity of approximately 80MB. The network link 2 is of the twisted pair type and runs from a repeater patch panel from each network point in the building and connects to one of four hubs running across a 50 Ohm coaxial backbone with eight BNC connections, each to allow thirty-two nodes.

The system 1 also comprises a number of processors 8, each of which has a CPU 9 and a network interface circuit 10. Each CPU 9 is connected to an output device which can be a printer 15, 16 or 17, or an E-mail modem circuit 18. The printers 15, 16 and 17 are of different types including dot matrix and laser types operating at different speeds. The E-mail communication circuit 18 is directly connected to a dedicated CPU 9.

The invention relates to the use and control of data processing devices such as read/write memories and output ports in order to provide a fast response time in the CPUs with improved fetch/decode cycle response and improved output signal versatility.

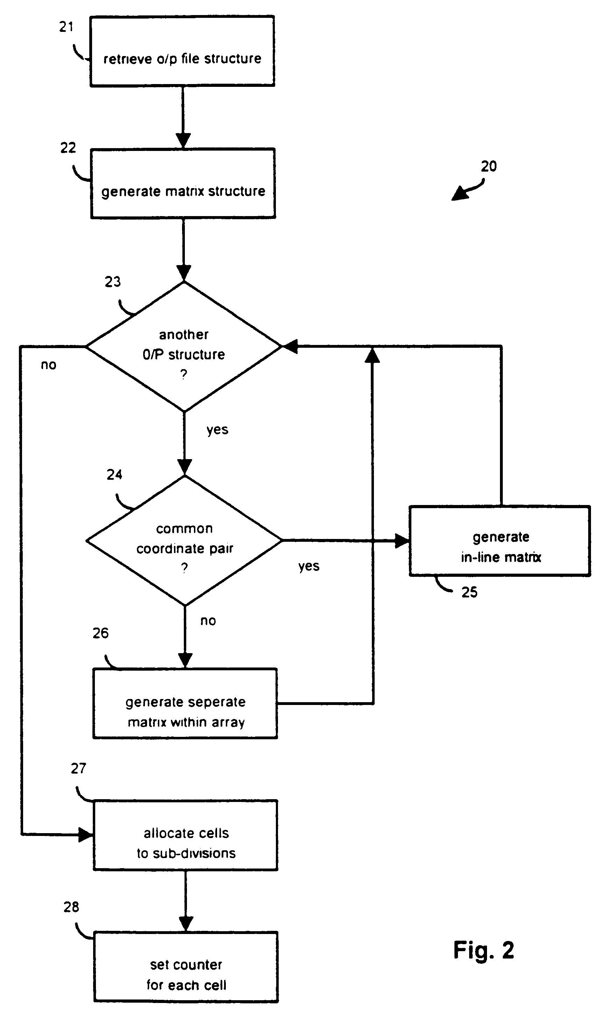

Referring now to Fig. 2, a signal processing method which is carried out by a CPU 9 for initialising its read/write memory before processing is described. The method is indicated by the numeral 20. In step 21, the CPU 9 retrieves signals identifying an output data structure. This structure is controlled by the CPU 4 of the host processor 3 and comprises a set of data elements, each associated with a data parameter. In step 22, the CPU 9 reads data associated with the structure to determine two parameters which apply to data elements of the output structure.

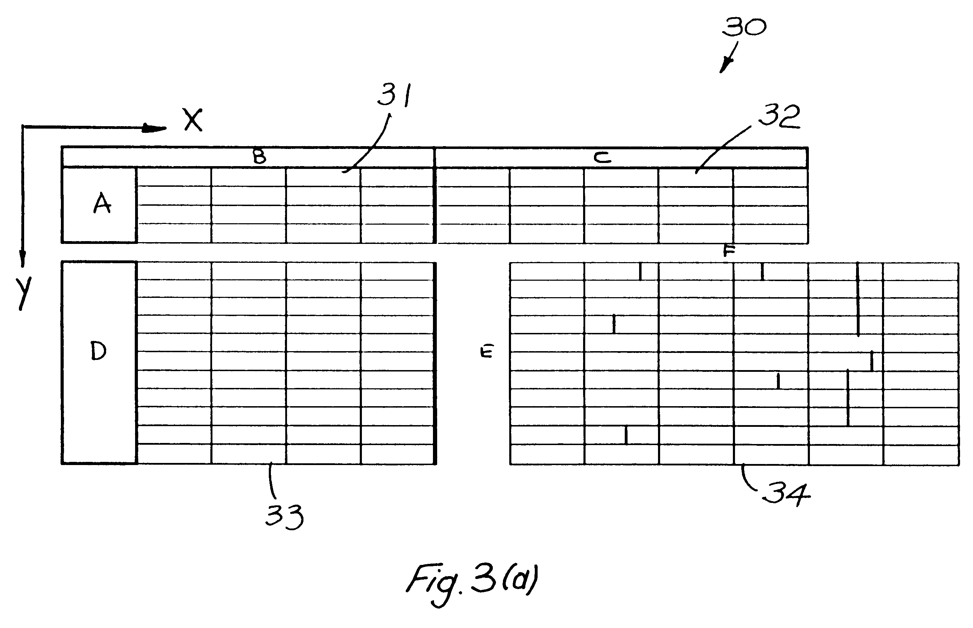

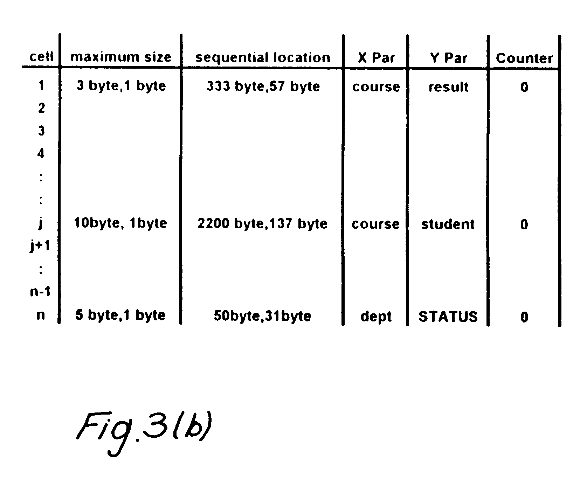

When two parameters for the particular output structure have been determined, the CPU 9 generates a matrix within an array structure in its read/write memory. The matrix structure comprises a set of cells such as illustrated in Fig. 3(a) which shows four matrices 31, 32, 33 and 34 in an array structure 30. Each matrix is defined by recording the location and maximum size of each cell in the X and Y directions as illustrated in Fig. 3(b). Further, there is a counter associated with each cell and this is initially set to zero, also as illustrated in Fig. 3(b). The first matrix which is generated in step 22 may be that indicated by the numeral 31 in the array structure 30 of Fig. 3(a). For the matrix 31, the parameters are A and B. The CPU 9 then determines if there is another pair of parameters which apply to data elements of the particular output file structure. If so, another matrix structure would be generated. It is essential that parameter parts for all elements are determined.

In step 23, the CPU 9 determines if there is another output data structure which could be generated during that data processing session and if so, in step 24 the processor determines if that output structure has a common parameter with the first output structure. If this is the case, in step 25 the processor generates an in-line matrix structure. An in-line matrix structure is one which has one parameter in common with an existing matrix. For example, the matrix 32 in Fig. 3(a) is in-line with the matrix 31 as both share parameter A for the Y axis, although for the X axis they have different parameters namely B & C. Further, a matrix 33 shown in Fig. 3(a) is in-line with the matrix 31 because they share the parameter B for the X axis. If there is no common coordinate parameter, in step 26 the CPU 9 generates a separate matrix within the array 30. In Fig. 3(a), the matrix 34 is a separate matrix as it does not share a parameter in either the X or the Y directions with any of the other matrices. In this embodiment, the parameters in the X and Y direction for the matrix 34 are F and E respectively. As stated above, if there are more than two parameters relating to elements of an output data structure, a plurality of matrices for that structure may be generated.

Each step for generation of a matrix involves recordal of the information shown in Fig. 3(b) in which for each cell the maximum size, location, X parameter, Y parameter and counter value is recorded. By setting only a maximum value for the cell size, each cell may be of any desirable size up to that maximum. Delimiting of cells may be achieved by control of an individual memory bit or by a full byte character. This variable size facility allows optimisation of read/write memory capacity. The variable nature of cell size is illustrated in Fig. 3(a) in which the matrix 34 has cells of different sizes extending in the X direction. However, to simplify processing, cells are kept to a common size as shown in the matrices 31, 32 and 33. As illustrated in Fig. 3(b), there are n cells in total. When the X and Y parameters are specified, they may be applicable to all values of the parameter, or alternatively to a finite range of possible values.

Another important aspect of the method 20 is that in step 27 when all of the output data structures have had associated read/write memory matrices generated, the processor allocates each cell to a sub-division of the array structure 30. A sub-division is a part of the array 30 for which any single data record is associated with only one cell within the sub-division, however, a single record may be associated with more than one sub-division. A sub-division may correspond directly with a matrix, or may be part of a matrix. In the latter case, a subdivision is associated with sub-ranges of values for parameters. Usefulness of this feature is described in more detail below. Step 28 is the setting of a counter value for each cell as indicated by Fig. 3(b). Again, usefulness of this feature will be apparent from the description below.

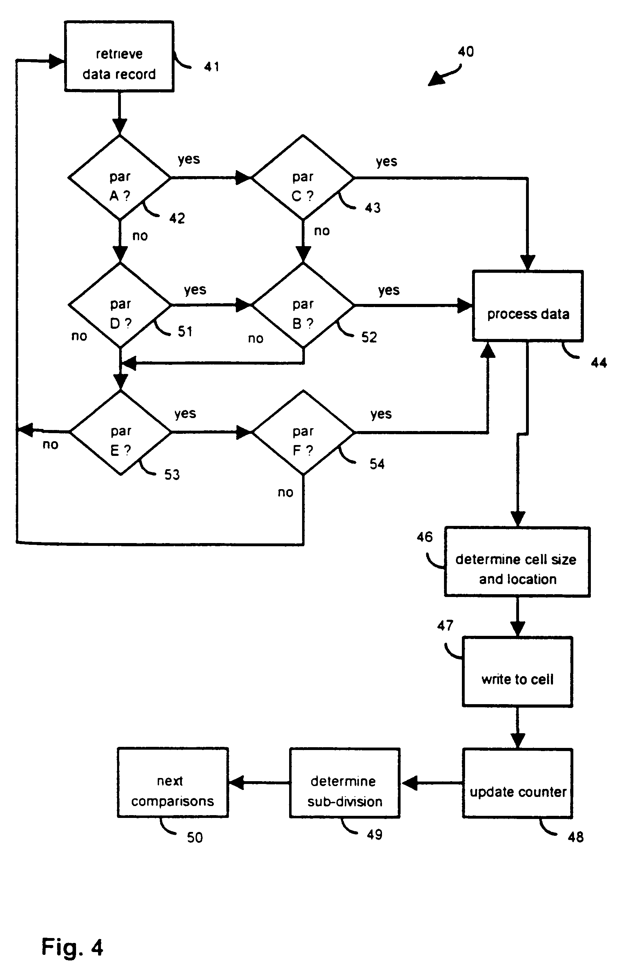

Referring now to Fig. 4, a continuation signal processing method 40 which is carried out by the CPU 9 is illustrated. This method includes technical steps underlying data processing so that it is more efficient and relates directly to the method 20. In step 41, the CPU 9 retrieves into read/write memory the first data record from the appropriate data file 6 via the host CPU 4 in response to a request under control of a program 7 and sets the required relationships with additional files. In step 42, it reads the record to determine if parameter A applies to the record. If so, it determines in step 43 if parameter C also applies. If parameter C also applies, then the record applies to the matrix 32 of the array 30 and in step 44 the CPU 9 processes the data according to appropriate programs 7 which have been retrieved. The size of the cell (within the maximum limit) is determined by the nature of the data stored in it, and its location is indicated in step 46 by the program being used.

In step 47, the CPU 9 writes the processed data to the appropriate cell within the matrix. In step 48 it updates the counter of that cell by incrementing its value by one.

In step 49, the sub-division for the cell is determined. By determining the sub-division, the CPU 9 can eliminate further checks for parameters A and C, or for specified ranges of values of parameters A and C if the sub-division is smaller than the matrix 32. This helps to reduce the further processing which is required, as the sub-division could never have more than one cell being updated from a single record.

Step 50 indicates the further parameter checks which are carried out for any remaining sub-divisions. In more detail, as determined by the steps 51 and 52, if parameters D and B apply to the record, then it is set that the appropriate matrix is the matrix 33 and steps 44 to 49 are repeated to update the relevant cell within that matrix. Whether or not repeated checks must be made for parameters A and C to determine if there are other appropriate cells is determined by the step 49 according to the manner in which the memory array 30 is sub-divided.

A check is made in step 53 for applicability of parameter E and subsequently in step 54 of parameter F to determine if a cell within the matrix 34 should be updated.

It will be appreciated that by operating in this manner, the processor generates with reference to a single record all of the data which could possibly be required while that record is in its read/write memory. The array 30 which is generated applies to a number of different output data structures and all of the cells which are relevant to a particular record are updated in the one set of operations when that record is in read/write memory. This is contrary to the prior approach. The significance of this processing method will be readily understood by way of the following example. A single retrieval operation would typically take 17 ms. A typical processing operation would typically take approximately 4 to 8 cycles, and a write operation 12 ms. For, say, five processing operations, there would be a total time of 1 microsecond, which is very much dwarfed by the 5 x 17 ms retrieval time for sequential retrieval. In the invention, there is only a single retrieval time of 17 ms, and delays in loading memory are also avoided. Further, the manner of handling processed data provides for direct intra-memory transfers to designated cells, which are very quick. Response time is further reduced by the manner of sub-dividing the array structure 30. In summary, the process of the invention overcomes the need for iterative fetch-decode-process-store cycles by using a single fetch operation to process the data for all possible output devices, and furthermore this is achieved in a very effective manner.

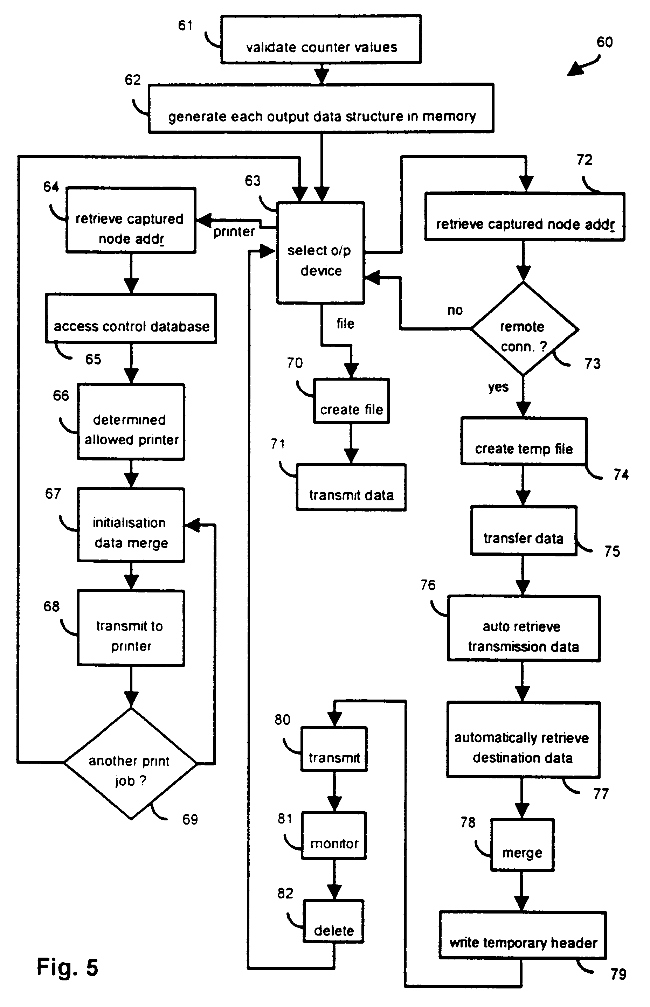

Another major benefit of creating and updating the array 30 will be appreciated from the description below of the manner in which output signals are transmitted. This method is indicated by the numeral 60 in Fig. 5. When all records have been processed in the method 40, in step 61 the CPU 9 validates the counter values of every cell. Each cell has a reference value and the CPU 9 ensures that the current value of each cell is the same as the reference value. If there is a discrepancy, the CPU 9 automatically completes searches through the records to ensure that the cell has been completely updated or over-written.

In step 62, the processor 9 writes each output data structure to read/write memory if it had been written to disk beforehand. In step 63 the processor determines what the appropriate output device is. If it is a printer, in step 64 the CPU 9 retrieves a user-associated node address which had been captured when the user logged onto the particular network processor 8. Security processes directed by the interface circuits 10 involve verification of a user password with reference to a processor node address. However, an additional step which had previously been carried out was that the node address was captured for later reference. In more detail, the node address is captured by the host processor 3 and written to a control database which stores a number of records, each record having a node address as the key. For each node address there is a set of output control data including a default matrix, array sub-division, a set of allowed users, and details of an allowed user group. In step 65, the CPU 9 uses the captured node address to access the control database via the network link 2 and in step 66 it determines the allowed matrix, array-sub-division and printer. In step 67 output device initialisation data is merged with the matrix data in the output data structure by way of intra-memory transfer to provide an output device control signal. This is transmitted in step 68 to the printer. In step 69, the CPU 9 determines if there is another print job. If the same printer is to be driven (as set by the control database), the relevant header data is merged with the corresponding output data structure to create new print instructions. If not the same printer, the new printer is determined in step 63.

If the output device is a disk at the host processor 3, the relevant output data structure is converted in memory to a suitable disk file format in step 70 and transmitted to disk in step 71.

If the output device is a communication circuit such as the E-mail of modem link 18 illustrated in Fig. 1, in step 72 the CPU 9 retrieves the captured node address. This is used to retrieve data from the control database and determine in step 73 if a remote connection can be established by the particular CPU 9 and if not, another output device is selected in step 63. The CPU 9 then continues to operate at a background mode below the data processing level and without the need for retrieval of any further programs from the host processor 3. This is achieved by reference to the control database. This operation involves creation of a temporary file in the memory in step 74 which contains the data structure for remote transmission. In step 75 there is a direct one-to-one intra-memory transfer of data at the rate of 9600 kbaud from the relevant matrix in the array 30 to the temporary file. In step 76 the CPU 9 automatically retrieves the necessary data (in textual form) for directing transmission of the file and in step 77 it retrieves the destination address required. The destination address is written to the temporary file in step 78 and header data is written in step 79. In step 80, the CPU 9 directs transmission of the temporary file to the remote destination according to the destination data and the transmission instructions. In step 81, the CPU 9 automatically monitors the transmission and attempts re-tries if connection faults arise. These monitoring operations may involve providing feedback on connection characteristics to the control database for later reference. When safely transmitted, the temporary file is deleted and the CPU 9 then sets the next output device.

All of the communication with output devices begins with the array in memory and the output data structures which are generated in step 62. This provides for transmission of output signals in an extremely simple manner as the number of fetch cycles required to storage devices is considerably reduced. Further, output of data is very versatile and there is no need for the relevant CPU 9 to retrieve additional programs from the host processor 3 to direct the various output operations. All of the output signal control is achieved at a low level by the CPU 9 without retrieval of additional programs -thereby resulting in reduced network traffic and complexity.

The invention is not limited to the embodiments hereinbefore described, but may be varied in construction and detail.

## Claims

1. A signal processing method carried out by a network processor (9) in a system having a host processor (3) and a plurality of network processors (9) interconnected by a network link (2), the method comprising the steps of retrieving data records from the host processor, processing the data and generating output signals, characterised in that
the network processor (9) initially :-
stores (21) an output data structure in its read/write memory in a common format whereby it is compatible with electronic mail, automatic fax, printer and screen output devices;
automatically generates (22) in its read/write memory a matrix (31-34) which relates to the output data structure and is associated with two data parameters (A, B, C, D, E, F) of the structure, wherein each parameter is associated with a coordinate (X, Y) of the matrix and the matrix comprises a plurality of cells defined by their location and maximum size, and in which each cell has a direct relationship with a data element in the related output data structure; and
stores additional output data structures and automatically creates (25, 26) a memory array (30) comprising matrices (31-34) in which each subsequent matrix has two parameter coordinates (A-F) and matrices (31, 32) are aligned within the read/write memory if they have a common parameter coordinate and are independent (34) if there is no common parameter coordinate and in which there is a matrix (31-34) corresponding to each output data structure;
after initialisation, the network processor:-
retrieves (41) a first data record from the host processor and carries out the sub-steps of :-
determining (42, 43, 51-54) if the record is associated with any of the parameters which form coordinates of the memory array (30) and if such a parameter is located, determining if there is a correlating parameter for any matrix (31-34) of the array,
processing (44) the data elements in the record according to programs retrieved from the host processor (4) and writing (47) the processed data to an appropriate cell within the identified matrix, and
when a cell has been updated, determining (49) if the record is associated with parameter correlations for other matrices and carrying out processing and cell updating operations; and
retrieves (50) the next record and repeats the parameter correlation searching operations and also the processing and updating operations; and
after processing the network processor:-
directly transfers (67, 75) data from cells of the memory array to each output data structure within the read/write memory; and
sequentially transmits (68, 71, 80) the data in the format of the output data structures to the output devices.

2. A method as claimed in claim 1 wherein the step of creating the memory array in read/write memory includes the sub-steps of storing (28) a counter for each cell of the memory array, setting the counter value to a reset value before retrieval of a data record and incrementing (48) a counter value when its associated cell is updated; and comprising the further steps of when all records have been processed, automatically comparing (61) the counter values with reference values to ensure that the memory array (30) has been completely updated from the data records.

3. A method as claimed in any preceding claim, wherein the step of generating the memory array includes the sub-steps of allocating (27) cells into sub-divisions whereby an update to a cell within a single sub-division provides a signal to the processor to cease searching for the parameter correlations of that sub-division within the individual record being searched.

4. A method as claimed in any preceding claim, wherein the step of transmitting the output file to the output device comprises the sub-steps of capturing a node address during log-on by a user, using (64) said node address to search (65) a control database to determine allowed output devices (66, 73) and data structures, and directing transmission of the output file (68, 71, 80) to the allowed devices.

5. A method as claimed in claim 4 wherein the control database stores data relating to default matrices (31-34) and memory array sub-divisions, and allowed users, and said data is automatically retrieved by the network processor before transmitting signals to the output devices.

6. A method as claimed in any preceding claim wherein the transmission (80) of an output file to a fax machine or an electronic mail device is preceded by the sub-steps of the processor automatically determining (76) default transmission data, and merging (78) said data with the output file to create the output file, and the further sub-steps after transmission of the final output file of automatically monitoring (81) transmission progress without retrieval of external transmission programs.
